# DEMANDE DE BREVET EUROPEEN

(11) **EP 1 447 284 A1**
(43) Date de publication de la demande: **18.08.2004**
(21) Numéro de dépôt: 04290212.2
(22) Date de dépôt: 27.01.2004
(51) Int. Cl.: B60R 21/20

(54) **Procédé de fabrication d'un siège de véhicule automobile équipé d'un système à coussin gonflable**

(30) Priorité: 06.02.2003 FR 0301438
(71) Demandeur: Centre d'Etude et de Recherche pour l'Automobile ( CERA), 51100 Reims (FR)
(72) Inventeur: Patte, Damien, 51490 Epoye (FR); Carpentier, Alain, 51390 Gueux (FR)
(74) Mandataire: Geismar, Thierry

(57) **Abrégé**

L'invention concerne un procédé de fabrication d'un siège (2) de véhicule automobile muni d'un système à coussin gonflable (1) comprenant les étapes suivantes :
- prévoir une coiffe (10) pourvue d'une fente (13) dont chacun des deux bords (14, 15) est muni de moyens de fermeture (16);
- fermer la fente en disposant les moyens de fermeture (16) dans un organe de liaison (17) ;
- disposer la coiffe dans un moule ;
- injecter un mélange précurseur de mousse dans la coiffe de sorte à former un corps en mousse (8) pourvu d'un logement (9) ;
- démouler ledit corps après expansion de la mousse ;
- monter le corps en mousse (8) sur l'armature (7) du siège en disposant le système à coussin gonflable (1) dans le logement (9).

Selon un autre aspect, l'invention concerne un siège de véhicule automobile réalisé par un tel procédé.

## Description

L'invention concerne un procédé de réalisation d'un siège de véhicule automobile équipé d'un système à coussin gonflable, ainsi qu'un siège réalisé par un tel procédé.

Les systèmes à coussin gonflable disposés dans l'habitacle des véhicules automobiles ont pour fonction, en cas de choc, de protéger les passagers en s'interposant entre ces derniers et tout élément potentiellement dangereux de la structure du véhicule automobile.

Pour ce faire, chaque système est connecté à un dispositif de détection de choc. Au moment du choc, l'activation de ce dispositif entraîne le gonflement immédiat du coussin, et sa sortie du système dans lequel il était stocké à l'état plié.

Dans une application particulière, les systèmes à coussin gonflable sont destinés à protéger les passagers en cas de choc latéral. De tels systèmes peuvent être disposés dans les dormants des sièges de véhicule automobile.

Il est connu dans l'état de l'art un siège dont le dossier comporte un sac de sécurité gonflable latéral disposé dans un boîtier qui est intégré audit dossier et qui comporte une face frontale dotée d'une ouverture de sortie pour le sac gonflable. La coiffe d'habillage du dossier comporte une fente qui est disposée en correspondance avec cette ouverture de sortie.

Pour la réalisation d'un tel siège, on réalise d'une part la coiffe, dotée de moyens pour fixer la fente au boîtier, et d'autre part le corps en mousse pourvu d'un logement agencé pour recevoir le système à coussin gonflable. On chausse ensuite le corps en mousse avec la coiffe que l'on fixe à l'aide d'organes de fixation, l'ensemble est ensuite monté sur l'armature qui comprend un système à coussin gonflable logé dans un boîtier. On fixe ensuite les moyens de fixation de la fente sur le boîtier.

Une coiffe cousue est sujette à des dispersions de cotes, de même pour le positionnement des moyens de fixation assemblés par couture. Le cumul des ces dispersions conduit à un positionnement imparfait des moyens vis à vis des moyens prévus sur le boîtier pour les fixer. Il en résulte des difficultés de fixation des moyens sur le boîtier augmentées par le fait que cette fixation se fait « en aveugle », c'est à dire sans voir le boîtier ni les moyens de fixations. De plus, les dispersions et le positionnement imparfait entraînent un mauvais aspect visuel des sièges dans le véhicule.

Par ailleurs, du fait que la coiffe n'est rattachée que ponctuellement au corps en mousse par le biais de moyens de fixation discrets, l'opérateur doit déployer une force de traction importante pour effectuer le montage des profils sur le boîtier.

Pour résoudre ces problèmes, l'invention propose notamment un procédé de fabrication d'un siège comprenant un système à coussin gonflable et dont le revêtement est muni d'une fente qui s'ouvre sous l'effet de la pression exercée par le déploiement du coussin, dans lequel la fente est fermée, par l'intermédiaire de moyens spécifiques, préalablement à la formation du corps en mousse.

En particulier, le corps en mousse est formé par la technique de moulage dite « in situ ». Cette technique consiste à injecter un mélange précurseur de mousse dans un moule dont la paroi interne a été au préalable recouverte de la coiffe dont la fente est fermée. On obtient ainsi directement l'élément de siège en sortie de moule.

L'étape de montage « en aveugle » est ainsi supprimée, l'opérateur ne doit plus déployer une force de traction importante et le positionnement du revêtement est parfait.

A cet effet, l'invention concerne un procédé de fabrication d'un siège de véhicule automobile, le siège comprenant une armature sur laquelle est monté un système à coussin gonflable, le système étant logé dans un corps en mousse qui est monté sur l'armature, la surface du corps étant pourvue, au moins partiellement, d'un revêtement, ledit procédé comprenant les étapes suivantes :
- prévoir une coiffe pourvue d'une fente dont chacun des deux bords est muni de moyens de fermeture, ladite coiffe formant le revêtement du corps en mousse ;
- fermer la fente en disposant les moyens de fermeture dans un organe de liaison, ledit organe étant agencé pour permettre une ouverture de la fente sous l'effet de la pression exercée par le déploiement du coussin gonflable ;
- disposer la coiffe dans un moule comprenant une cuve et un couvercle définissant entre eux une cavité de moulage lorsque le moule est fermé, la cavité de moulage étant agencée pour former dans le corps en mousse un logement apte à recevoir le système à coussin gonflable ;
- injecter un mélange précurseur de mousse dans la coiffe de sorte à former le corps en mousse ;
- démouler ledit corps après expansion de la mousse ;
- monter le corps en mousse sur l'armature en disposant le système à coussin gonflable dans le logement.

Selon un autre aspect, l'invention concerne un siège de véhicule automobile réalisé par un tel procédé, le siège comprenant une armature sur laquelle est monté un corps en mousse et un système à coussin gonflable, ledit système étant logé dans un logement du corps en mousse, la surface dudit corps étant pourvu, au moins partiellement, d'un revêtement, ledit revêtement comprenant une fente dont chacun des deux bords est muni de moyens de fermeture disposés dans un organe de liaison de sorte à fermer la fente, ladite fente étant prévue pour s'ouvrir sous l'effet de la pression exercée par le déploiement du coussin gonflable.

Selon une réalisation, le système à coussin gonflable est prévu dans le dormant du siège de sorte à s'ouvrir latéralement par rapport à l'utilisateur lorsque le véhicule subit un choc prédéterminé.

D'autres objets et avantages de l'invention apparaîtront au cours de la description qui suit, faite en référence aux dessins annexés.
La figure 1 est une vue en coupe de dessus d'un premier mode de réalisation d'un siège de véhicule automobile dans lequel un système à coussin gonflable est intégré.
La figure 2 est une vue analogue à celle de la figure 1, le coussin gonflable étant déployé.
La figure 3 est une vue en coupe de dessus d'un deuxième mode de réalisation d'un siège de véhicule automobile dans lequel un système à coussin gonflable est intégré.
La figure 4 est une vue analogue à celle de la figure 3, le coussin gonflable étant déployé.
La figure 5 est une vue en coupe de dessus d'un troisième mode de réalisation d'un siège de véhicule automobile dans lequel un système à coussin gonflable est intégré, le coussin gonflable étant déployé.

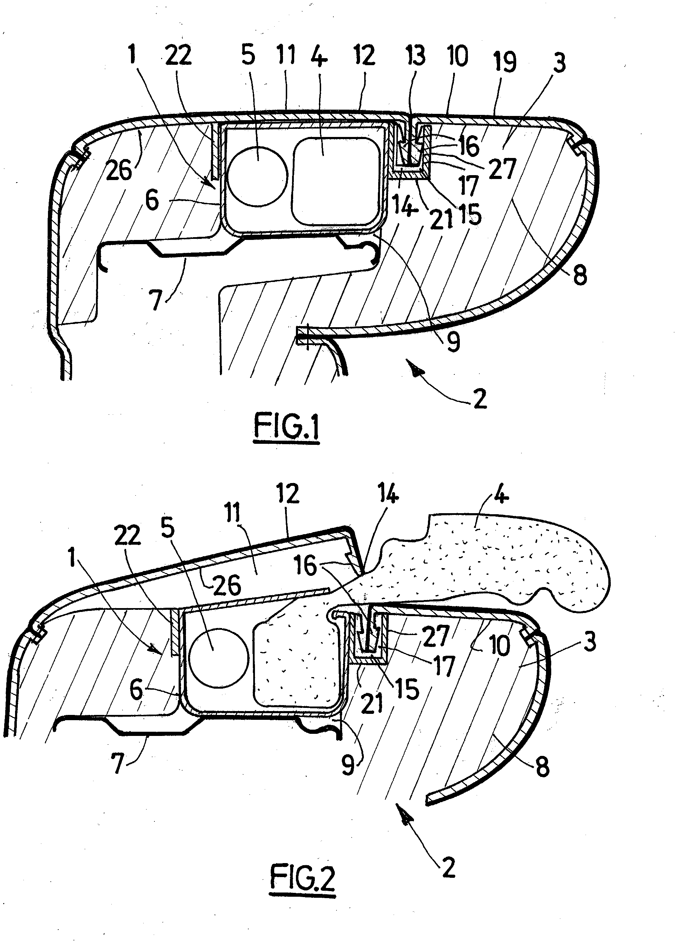

En référence aux figures 1 et 2, un premier mode de réalisation d'un système à coussin gonflable 1 logé dans un siège 2 de véhicule automobile est décrit.

Le siège de véhicule automobile comprend une armature 7 sur laquelle est monté un corps en mousse 8 et un système à coussin gonflable 1. La surface du corps en mousse 8 est pourvue, au moins partiellement, d'un revêtement 10.

Un tel corps en mousse 8 revêtu forme le dossier du siège automobile, un deuxième corps en mousse revêtu peut être prévu pour former l'assise du siège.

Le système à coussin gonflable 1 est par exemple logé dans le dormant 3 du siège 2 de sorte à s'ouvrir latéralement par rapport à l'utilisateur lorsque le véhicule subit un choc prédéterminé. Plus particulièrement, le système à coussin gonflable est logé dans un logement 9 du corps en mousse 8 prévu à cet effet.

Selon le mode de réalisation représenté à la figure 1, le système à coussin gonflable 1 comprend un coussin gonflable 4, des moyens de gonflement du coussin 5 et un réceptacle 6 pour le coussin 4 et les moyens de gonflement 5.

Le réceptacle 6 est par exemple fixé à l'armature 7 du siège 2, le coussin 4 et les moyens de gonflement 5 étant fixés au fond du réceptacle 6.

Un volet d'obturation 11 est prévu pour obturer le réceptacle 6 et ainsi encapsuler le coussin 4 et les moyens de gonflement 5, comme cela est représenté sur la figure 1. Ce volet 11 est situé contre le revêtement 10 et est articulé à un des bords du réceptacle 6 de manière à s'écarter du réceptacle et à libérer un passage vers l'extérieur pour le coussin sous l'effet de la pression exercée par le déploiement du coussin gonflable 4, comme représenté figure 2.

Selon une variante, le revêtement 10 peut être situé à distance du volet d'obturation 11, une couche de mousse étant prévue entre les deux, de façon à assurer un confort tactile.

A cet effet, le revêtement 10 comprend plusieurs parties cousues entre elles. Une partie 12 de ce revêtement est prévue pour s'écarter et libérer un passage vers l'extérieur pour le coussin 4. Pour ce faire, la partie 12 du revêtement recouvre le système à coussin gonflable 1 et le revêtement 10 est muni d'une fente 13, l'un des bords de la partie 12 correspondant à l'un des bords 14, 15 de la fente 13.

Lorsque le coussin est retenu dans le réceptacle 6 et n'est pas déployé, comme représenté à la figure 1, la fente 13 est fermée et la partie 12 du revêtement est retenue contre le corps en mousse 8. Pour ce faire, les bords 14, 15 de la fente sont munis de moyens de fermeture 16 prévus pour être disposés et retenus dans un organe de liaison 17 disposé dans le corps en mousse 8 en regard de la fente 13 et s'entendant parallèlement à celle-ci.

Les moyens de fermeture 16 sont par exemple fixés par couture aux bords de la fente 13. Selon le premier mode de réalisation représenté sur les figures 1 et 2, ces moyens de fermeture se présentent sous la forme de saillies prévues pour s'emboîter dans l'organe de liaison 17. L'organe de liaison 17 peut, par exemple avoir une forme générale de U dont la concavité est tournée vers le revêtement. Des saillies sont prévues dans l'organe de liaison pour retenir les moyens de fermeture 16 de la fente.

Selon une variante, un élément 27 de forme complémentaire à la forme en U est inséré et fixé, par l'intermédiaire de moyens de fixation réciproque, dans l'organe de liaison. Dans ce cas, les saillies prévues pour retenir les moyens de fermeture 16 se trouvent dans l'élément 27.

Lors du gonflage du coussin 4, le moyen de fermeture 16 associé au bord de la partie 12 est libéré de l'organe de liaison 17 et la partie 12 s'écarte pour laisser le passage au coussin 4.

Dans ce mode de réalisation, représenté sur les figures 1 et 2, l'organe de liaison 17 est fixé sur le réceptacle 16 au moyen par exemple d'un clipsage. Dans ce cas, l'organe de liaison comprend, en outre d'une partie 21 s'étendant parallèlement à la fente 13, une partie 22 prévue pour s'enclipser autour de la périphérie du réceptacle 16. La partie 22 présente alors une forme complémentaire de la périphérie du réceptacle, par exemple une couronne rectangulaire pour un réceptacle parallépipédique.

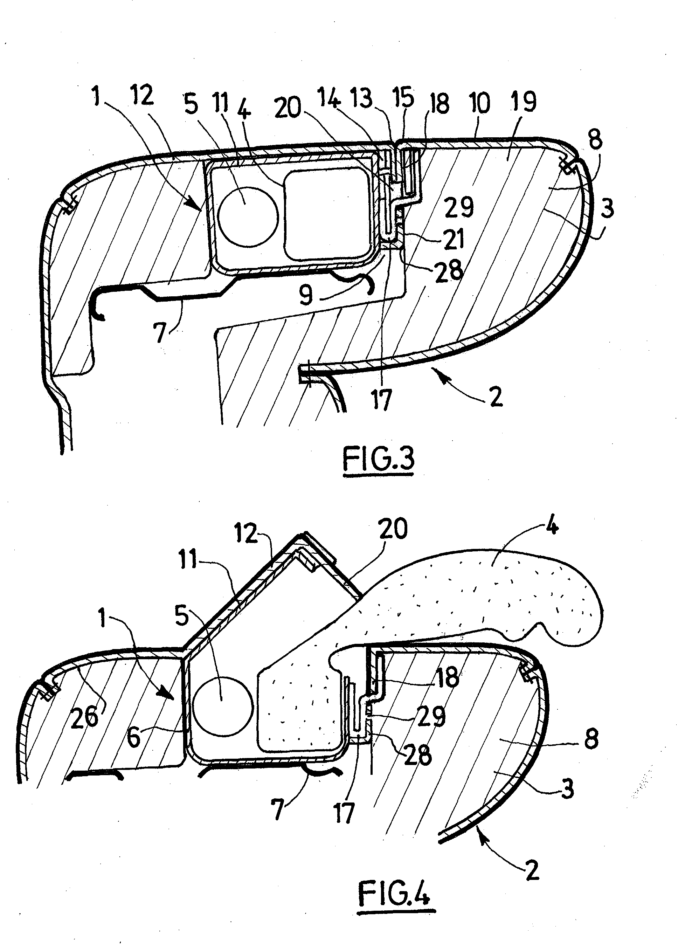

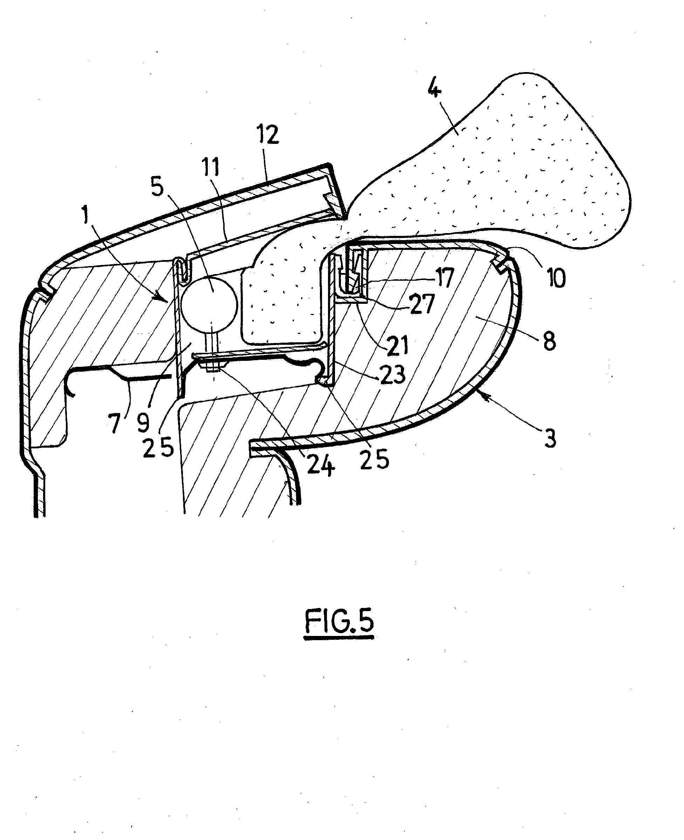

Selon un deuxième mode de réalisation représenté sur les figures 3 et 4, un moyen de fermeture 18 fixé à un bord 15 de la fente comprend l'organe de liaison 17 qui forme une cavité en forme de U.

Le moyen de fermeture 20 fixé au bord 14 de la fente vient s'emboîter dans l'organe de liaison 17. Le bord 14 correspond au bord de la partie 12 du revêtement qui est destinée à se déplacer lors du déploiement du coussin 4. Le moyen de fermeture 20 se présente sous la forme d'une languette insérée dans la cavité formée par l'organe de liaison 17. L'organe de liaison est inséré et fixé dans un logement 28, de forme complémentaire, prévu le long de l'une des faces 29 du réceptacle 6 et s'étendant en regard de la fente.

Le logement 28 comprend alors une cavité prévue pour coopérer avec une saillie prévue sur l'une des ailes du U formé par l'organe de liaison de sorte à assurer la fixation de l'organe de liaison 17 dans le logement 28.

Dans ce mode de réalisation, la partie 12 du revêtement est en outre fixée au volet d'obturation 11. A cet effet, une cavité est prévue dans le moyen de fermeture 20. Un ergot s'étendant à partir du volet d'obturation 11 est inséré dans la cavité.

Ainsi lors du gonflage du coussin 4, le volet d'obturation s'écarte sous l'effet de la pression exercée par le déploiement du coussin entraînant avec lui la partie 12 pour laisser le passage au coussin.

Selon le mode de réalisation représenté figure 5, le système à coussin gonflable 1 comprend uniquement le coussin gonflable 4 et les moyens de gonflement 5. Le système 1 est fixé directement à l'armature 7 du siège 2 par l'intermédiaire de moyens de fixation 24. L'organe de liaison 17 comprend alors, en outre de la partie 21, une paroi 23 s'étendant sensiblement perpendiculairement au revêtement 10 de telle sorte que la paroi entoure le système à coussin gonflable et forme un réceptacle pour ce système. Des moyens 25 sont alors prévus à l'extrémité de la paroi 23 opposée au revêtement 10, pour fixer, par exemple par enclipsage, la paroi 23 à l'armature 7 du siège. Le volet d'obturation 11 est articulé directement sur l'organe de liaison 17. Le fonctionnement est le même que pour les modes de réalisation déjà décrits.

Selon une réalisation particulière, la partie 21 de l'organe de liaison 17 s'étendant parallèlement à la fente, présente une longueur égale à celle de la fente 13. La fente peut s'étendre sur toute la hauteur du dormant 3 du siège 2.

Selon une variante, tout ou partie du revêtement 10 peut être pourvue, du côté faisant face au corps en mousse 8, d'une couche d'envers 26 non adhésive à la mousse et de haute résistance à la traction. La couche d'envers est par exemple associée par laminage avec le revêtement 10.

La couche d'envers permet d'éviter que le revêtement 10, notamment la partie 12 de celui-ci, n'adhère au corps en mousse 8, ce qui pourrait provoquer des projections de mousse lors du déplacement de la partie 12 au moment du déploiement du coussin gonflable 4.

Le procédé de fabrication d'un siège de véhicule automobile tel que décrit ci-dessus va maintenant être décrit.

On distingue trois modes de fabrication, respectivement en relation avec le mode de réalisation du siège représenté sur les figures 1 et 2, avec celui représenté sur les figures 3 et 4, et avec celui représenté sur la figure 5.

En relation avec les modes de réalisation représentés sur les figures 1 et 2, on confectionne tout d'abord une coiffe formant revêtement 10 du corps en mousse 8 en plusieurs parties et en prévoyant une fente 13 dont les bords sont munis des moyens de fermeture 16.

Le système à coussin gonflable est fixé à l'armature 7 du siège.

On ferme la fente 13 en disposant les moyens de fermeture dans l'organe de liaison 17.

La coiffe est ensuite disposée dans un moule comprenant une cuve et un couvercle définissant entre eux une cavité de moulage lorsque le moule est fermé. La cavité de moulage est agencée pour former dans le corps en mousse 8 un logement 9 apte à recevoir le système à coussin gonflable au moyen, par exemple, d'un élément rapporté dans le moule définissant la forme du logement 9.

Un mélange précurseur de mousse est injecté dans la coiffe de sorte à former le corps en mousse 8.

Après expansion de la mousse, le corps est démoulé et monté sur l'armature 7 du siège 2 de tel sorte que le système à coussin gonflable 1 soit disposé dans le logement 9, la partie 22 de l'organe de liaison 17 venant s'enclipser autour de la périphérie du réceptacle 6.

En relation avec le mode de réalisation représenté sur les figures 3 et 4, le procédé de fabrication est le même, sauf que la fente est fermée par insertion du moyen de fermeture 20 dans la cavité de l'organe de liaison 17 intégré au moyen de fermeture 18. L'organe de liaison est enclipsé dans le logement 28 au cours du montage du corps en mousse 8 sur l'armature 7.

En relation avec le mode de réalisation représenté figure 5, les étapes du procédé de fabrication sont les mêmes sauf que l'on enclipse la paroi 23 de l'organe de liaison 17 directement à l'armature 7 du siège, autour du système à coussin gonflable au cours du montage du corps 8 sur l'armature.

## Revendications

1. Procédé de fabrication d'un siège (2) de véhicule automobile, ledit siège comprenant une armature (7) sur laquelle est monté un système à coussin gonflable (1), ledit système étant logé dans un corps en mousse (8) qui est monté sur l'armature (7), la surface dudit corps étant pourvue, au moins partiellement, d'un revêtement (10), ledit procédé comprenant les étapes suivantes :
- prévoir une coiffe pourvue d'une fente (13) dont chacun des deux bords (14, 15) est muni de moyens de fermeture (16, 18, 20), ladite coiffe formant le revêtement (10) du corps en mousse (8) ;
- fermer la fente (13) en disposant les moyens de fermeture (16, 18, 20) dans un organe de liaison (17), ledit organe étant agencé pour permettre une ouverture de la fente (13) sous l'effet de la pression exercée par le déploiement du coussin gonflable (4) ;
- disposer la coiffe dans un moule comprenant une cuve et un couvercle définissant entre eux une cavité de moulage lorsque le moule est fermé, la cavité de moulage étant agencée pour former dans le corps en mousse (8) un logement (9) apte à recevoir le système à coussin gonflable (1 ) ;
- injecter un mélange précurseur de mousse dans la coiffe de sorte à former le corps en mousse (8) ;
- démouler ledit corps après expansion de la mousse ;
- monter le corps en mousse (8) sur l'armature (7) en disposant le système à coussin gonflable (1) dans le logement (9).

2. Procédé selon la revendication 1, dans lequel lors de l'étape de montage du corps en mousse (8) sur l'armature (7), l'organe de liaison (17) est associé au système à coussin gonflable (1).

3. Procédé selon la revendication 1, dans lequel lors de l'étape de montage du corps en mousse (8) sur l'armature (7), l'organe de liaison (17) est associé à l'armature (7).

4. Siège de véhicule automobile réalisé par le procédé selon la revendication 1, ledit siège comprenant une armature (7) sur laquelle est monté un corps en mousse (8) et un système à coussin gonflable (1), ledit système étant logé dans un logement (9) du corps en mousse (8), la surface dudit corps étant pourvu, au moins partiellement, d'un revêtement (10) dont une partie (12) se trouve en regard du système à coussin gonflable, ledit revêtement comprenant une fente (13) dont chacun des deux bords (14, 15) est muni de moyens de fermeture (16, 18, 20) disposés dans un organe de liaison (17) de sorte à fermer la fente (13), ladite fente étant prévue pour s'ouvrir sous l'effet de la pression exercée par le déploiement du coussin gonflable (4).

5. Siège selon la revendication 4, **caractérisé en ce que** le système à coussin gonflable (1) comprend un coussin gonflable (4), des moyens de gonflement du coussin (5) et un réceptacle (6) destiné à encapsuler le coussin (4) et les moyens de gonflement (5), un volet d'obturation (11) du réceptacle (6) étant prévu du côté de la partie (12) du revêtement (10), ledit volet étant destiné à s'ouvrir et à libérer un passage sous l'effet de la pression exercée par le déploiement du coussin (4).

6. Siège selon la revendication 5, **caractérisé en ce que** l'organe de liaison (17) est fixé au réceptacle (6) par emboîtement de l'organe de liaison autour de la périphérie du réceptacle du côté du revêtement (10).

7. Siège selon la revendication 5, **caractérisé en ce qu'**un moyen de fermeture (18) comprend l'organe de liaison (17), ledit organe de liaison étant fixé dans un logement (28) prévu sur l'une des faces (29) du réceptacle (6), ledit logement s'étendant en regard de la fente (13).

8. Siège selon la revendication 4, **caractérisé en ce que** le système à coussin gonflable (1) comprend un coussin gonflable (4) et des moyens de gonflement du coussin (5), l'organe de liaison (17) comprenant une paroi (23) s'étendant sensiblement perpendiculairement au revêtement (10) et formant réceptacle autour du système à coussin gonflable (1), un volet d'obturation (11) du réceptacle étant prévu du côté de la partie (12) du revêtement, ledit volet étant destiné à s'ouvrir et à libérer un passage sous l'effet de la pression exercée par le déploiement du coussin (4).

9. Siège selon la revendication 8, **caractérisé en ce que** la paroi (23) de l'organe de liaison (17) est munie de moyens de clipsage (25) sur l'armature (7) du siège (2).

10. Siège selon la revendication 7, **caractérisé en ce que** le volet d'obturation (11) du réceptacle est fixé au revêtement (10) par l'intermédiaire d'un ergot prévu sur ledit volet, l'ergot étant apte à être engagé dans une cavité prévue dans un moyen de fermeture (18).

11. Siège selon l'une des revendications 4 à 10, **caractérisé en ce que** le revêtement (10) comprend plusieurs partie cousues entre elles, au moins la partie (12) dudit revêtement, déplacée sous l'effet de la pression exercée par le déploiement du coussin (4), étant pourvue de son côté faisant face au corps en mousse (8), d'une couche d'envers (26) non adhésive à la mousse et de haute résistance à la traction.

12. Siège selon l'une des revendications 4 à 11, **caractérisé en ce que** le système à coussin gonflable (1) est prévu dans le dormant (3) dudit siège de telle sorte à s'ouvrir latéralement par rapport à l'utilisateur lorsque le véhicule subit un choc prédéterminé.
